# EUROPÄISCHE PATENTSCHRIFT

(11) **EP 0 835 429 B1**
(45) Veröffentlichungstag und Bekanntmachung des Hinweises auf die Patenterteilung: **22.12.2004**
(21) Anmeldenummer: 96922863.4
(22) Anmeldetag: 20.06.1996
(51) Int. Cl.: G01K 11/06

(54) **TEMPERATUR-INDIKATOR FÜR GEKÜHLTE PRODUKTE ODER ÄHNLICHES**
TEMPERATURE INDICATOR FOR REFRIGERATED PRODUCTS OR THE LIKE
INDICATEUR DE TEMPERATURE POUR PRODUITS REFRIGERES OU SIMILAIRE

(30) Priorität: 30.06.1995 DE 19524007
(43) Veröffentlichungstag der Anmeldung: 15.04.1998
(73) Patentinhaber: EMTEC Magnetics GmbH, 77731 Willstätt (DE)
(72) Erfinder: VEITCH, Ronald, John, D-67133 Maxdorf (DE); BETTINGER, Günter, D-67105 Schifferstadt (DE); SCHNEIDER, Norbert, D-67122 Altrip (DE)
(74) Vertreter: Müller, Jörg Uwe
(86) Internationale Anmeldenummer: PCT/EP1996/002677
(87) Internationale Veröffentlichungsnummer: WO 1997/003341

(56) Entgegenhaltungen:
- WO-A-87/07373
- FR-A- 2 640 750
- US-A- 3 675 501
- US-A- 4 850 716

## Beschreibung

Die Erfindung betrifft eine Vorrichtung zur irreversiblen Anzeige zeitweiliger Überschreitung der zulässigen Temperatur von Waren, Räumen oder ähnlichem, bestehend aus einem Behälter, welcher in wärmeleitender Verbindung mit der Ware oder dem umgebenden Raum steht und der in seinem Innenraum eine Suspension enthält, bestehend aus einem Medium mit einem Schmelzpunkt oder Erweichungsbereich, welcher im Bereich der Kontrolltemperatur liegt sowie in dem Medium suspendierte magnetisierbare Partikel. Außerdem betrifft die Erfindung ein Verfahren zur Temperaturkontrolle mit der entsprechenden Vorrichtung sowie ein Verfahren zur Herstellung der Vorrichtung.

Vorrichtungen beziehungsweise Verfahren der eingangs genannten gattungsmäßigen Art sind in den Veröffentlichungen US 3 675 501 sowie der DE-A 42 10 739 und US-A-4 850 716 beschrieben.

Bei der Tiefkühllagerung bestimmter Nahrungsmittel muß, wenn eine längere Haltbarkeit gewährleistet sein soll, eine Lagertemperatur von mindestens -18 °C eingehalten werden, die allenfalls kurzzeitig überschritten werden darf. Wird eine Temperatur von - 10 °C bis -15 °C überschritten, so ist die Haltbarkeit vieler Lebensmittel nicht mehr gewährleistet; das Tiefkühlgut gilt als angetaut, obwohl es äußerlich noch gefroren erscheint Für die Temperaturkontrolle existieren unter anderem die EG-Richtlinien 89/108 sowie 98/108.

Analoges gilt für die Lagerung von Fertignahrung, für die im allgemeinen eine Temperatur von wenigen Grad über Null Grad Celsius vorgeschrieben ist, für Blutplasmen oder für andere Artikel, bei denen eine Vorschrift für eine maximal tolerierbare Lagertemperatur existiert.

Weiterhin besteht das Bedürfnis, die Umgebungstemperatur oder die Temperatur von abgeschlossenen Räumen und ähnliches zu kontrollieren und unzulässige Abweichungen irreversibel zu registrieren.

Normalerweise sind Tiefkühlgeräte mit eingebauten Thermometern oder Temperaturschreibern ausgerüstet, welche die Temperatur an einer bestimmten Stelle des Kühlraumes anzeigen, oder es wird ein gebräuchliches Thermometer auf oder neben das Kühlgut gelegt und zum Ablesen aus dem Kühlgerät herausgenommen. In diesen Fällen besteht keine Gewähr, daß die Temperatur des Kühlgutes genau gemessen wird. Außerdem kann durch Stapelung und Packung des Kühlgutes die Konvektion der Luft im Kühlraum behindert werden, so daß selbst bei einwandfreier Funktion des Gerätes an einigen Stellen des Kühlraumes die für die Haltbarkeit der Nahrungsmittel erforderlichen Mindesttemperaturen überschritten werden können. Für den Benutzer des Tiefkühlgutes ist das Überschreiten der Haltbarkeitstemperatur nicht zu erkennen, so daß er dem Verderb der Nahrungsmittel nicht durch rechtzeitige Entnahme und alsbaldigen Verbrauch begegnen kann. Die Gefahr, daß tiefgefrorene Nahrungsmittel unbemerkt angetaut werden, ist beispielsweise besonders groß, wenn eine größere Menge Kühlgut warm in das Tiefkühlgerät eingebracht wird. Daher ist es wünschenswert, einen Temperatur-Indikator zur Verfügung zu haben, der für jede Nahrungsmittelverpackung oder eine Gruppe von Packungen anzeigt, ob sie während ihrer gesamten Lagerzeit hinreichend gekühlt waren.

Die bereits genannte US-Patentschrift 3 675 501 beschreibt eine Art Fieberthermometer, bestehend aus verschiedenen geschlossenen Behältern, welche im temperaturrelevanten Bereich Medien wie Wachse beziehungsweise Fettsäuren enthalten, in denen magnetische Partikel wie Bariumferrit suspendiert sind. Über diese Anordnung wird eine Magnetfolie gezogen, die im Moment des Phasenübergangs flüssig zu fest anwesend ist und eine Ausrichtung der magnetischen Pigmente bewirkt. Danach wird die Folie abgezogen und der Behälter dem Patienten verabreicht und nach Entnahme kann man dann feststellen, in welchem Behälter sich die eingefrorene magnetische Ordnung aufgelöst hat, was als Maß für die Temperatur genommen wird. Aus der ebenfalls genannten DE-A 42 10 739 ist ein Behälter, bevorzugt ein flacher Beutel, bekannt, bestehend aus einer transparenten Kunststoff-Folie und einem darin enthaltenen magnetischen Medium zusammen mit einem Eutektikum, mit einem Schmelzpunkt im Bereich von etwa 0 °C bis -50 °C. Die Handhabung geschieht ähnlich wie in der US-Patentschrift und es entsteht eine optisch und/oder magnetisch ablesbare Information auf dem Medium. Zusätzlich kann noch ein weiterer eine magnetische Information enthaltender Streifen am Beutel sichtbar nach Unterschreiten der Lagertemperatur aufgebracht werden, so daß eine Information bei Überschreiten der zulässigen Lagertemperatur in eine weitere Information verwandelt wird.

Die oben genannten Vorrichtungen weisen als hauptsächlichen Nachteil auf, daß insbesondere bei nur kurzzeitiger Überschreitung der zulässigen Lagertemperatur es nicht sicher ist, daß die eingefrorene magnetische Struktur kurzzeitig verschwindet, vor allen Dingen, wenn der Behälter während der Temperaturänderung nicht oder kaum bewegt wird. Außerdem hat sich als Nachteil herausgestellt, daß die Anzeige nicht deutlich genug erkennbar ist.

Deswegen bestand die Aufgabe, eine Vorrichtung der eingangs genannten Art sowie ein Verfahren zur Kontrolle von Waren mit der genannten Vorrichtung zu finden, welches auf der einen Seite einfach handhabbar ist und zum anderen auch nur bei kurzzeitiger Überschreitung der zulässigen Lagertemperatur außerhalb der Spezifikation sowie auch bei nicht bewegtem Behälter eine irreversible und fälschungssichere Anzeige ermöglicht, welche auch bestehen bleibt, falls anschließend das zu kontrollierende Gut wieder in den Bereich der zulässigen Lagertemperatur gebracht worden ist. Außerdem soll auch die Kontrolle einer zulässigen Umgebungstemperatur möglich sein. Schließlich soll die Vorrichtung rationell als Massenprodukt herstellbar sein.

Erfindungsgemäß gelöst wurden die Aufgaben mit einer Vorrichtung gemäß Anspruch 1 sowie einem Verfahren gemäß Ansprüchen 21 und 22. Weitere Einzelheiten der Erfindung gehen aus der Beschreibung sowie den Zeichnungen hervor.

Anschließend wird die Erfindung anhand der Figuren näher erläutert und zwar zeigen:
- Figur 1: einen Querschnitt durch einen erfindungsgemäßen Behälter vor Eintritt der Behandlung
- Figur 2: den gleichen Behälter nach Magnetfeldbehandlung sowie Überschreiten der zulässigen Lagertemperatur
- Figur 3: eine Draufsicht auf eine Ausführungsart eines Behälters vor Überschreiten der zulässigen Lagertemperatur
- Figur 4: eine entsprechende Ansicht nach Überschreiten der zulässigen Lagertemperatur
- Figur 5: einen Querschnitt durch eine weitere Ausführung des erfindungsgemäßen Behälters
- Figur 6: einen Querschnitt durch den erfindungsgemäßen Behälter und seine Lage in Bezug auf das zu kontrollierende Gut
- Figuren 7 - 9: verschiedene Draufsichten eines Behälters im aufgetauten Zustand analog Figur 4
- Figuren 10 - 11: Querschnitte durch alternative Behälteranordnungen zu Figur 5
- Figur 12: einen Querschnitt durch eine weitere Ausführungsform eines erfindungsgemäßen Behälters
- Figur 13: einen Querschnitt eines anderen erfindungsgemäßen Behälters analog Figur 1
- Figur 13a: einen vergrößerten Ausschnitt des Behälters gemäß Figur 13
- Figur 14: einen entsprechenden Querschnitt analog Figur 2
- Figur 15: zeigt einen Querschnitt durch eine abgewandelte Form eines Behälters analog Figur 5
- Figur 16: zeigt einen Querschnitt durch eine abgewandelte Ausführung eines Behälters analog Figur 13 vor Eintritt der Behandlung
- Figur 16a: einen vergröBerten Ausschnitt eines Behälters gemäß Figur 16
- Figur 17: einen Behälter gemäß Figur 16 nach Magnetfeldbehandlung sowie Überschreiten der zulässigen Temperatur
- Figur 18 a - d: schematische Ablaufschritte bei der Herstellung von Behältern gemäß der Figuren 1 - 17
- Figur 19 und Figur 19b: Querschnitte durch eine abgewandelte Ausführung des Behälters vor beziehungsweise nach Behandlung sowie Überschreiten der zulässigen Temperatur
- Figur 19a und 19c: entsprechende Aufsichten auf Behälter gemäß Figur 19b nach Auftauen

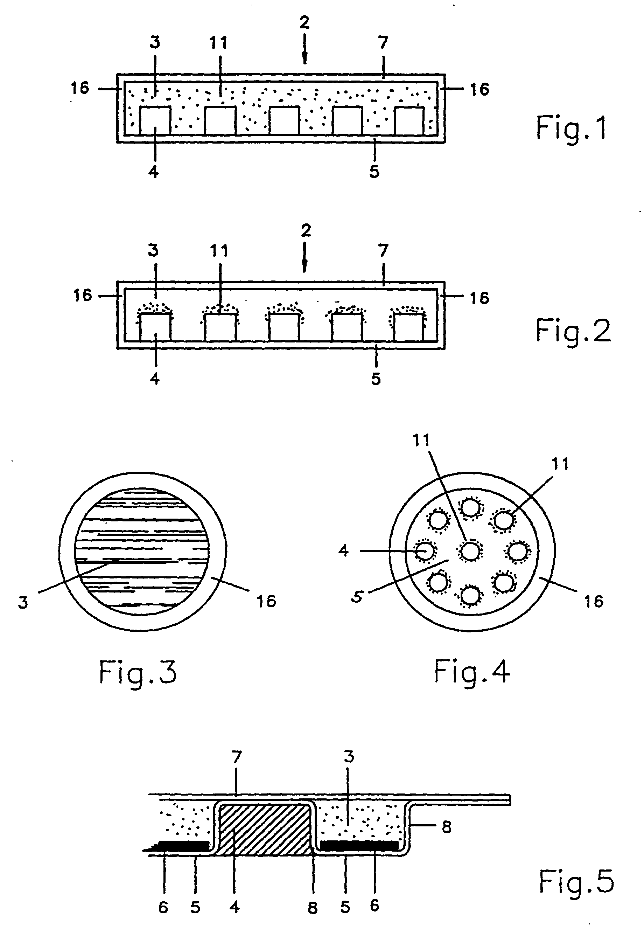

Die Figur 1 zeigt schematisch die einfachste Ausführung gemäß der vorliegenden Erfindung. In einem Behälter (2) mit ganz oder teils transparenten Sichtflächen (7, 5) befindet sich eine Suspension (3) bestehend aus einem Medium, welches oberhalb der kritischen Lagertemperatur flüssig ist und das umgekehrt innerhalb des zulässigen Lagertemperaturbereichs fest ist. In diesem Medium sind magnetisierbare Partikel suspendiert, welche vorzugsweise in einem polymeren organischen Bindemittel zusätzlich dispergiert sind. Weitere infrage kommende Zusätze sind weiter unten aufgeführt. Des weiteren befinden sich in dem Behälter (2) an einzelnen Stellen mindestens ein, vorzugsweise aber mehrere feste magnetisierbare Körper (4). Im einfachsten Fall ist dies ein magnetisierbares Material, welches in Bindemittel, Wachs oder ähnlichem eingepreßt ist oder auch als Pulver in Taschen oder Noppen des Behälters (vgl. Figur 5) eingepreßt beziehungsweise eingebracht wird und das sowohl oberhalb wie unterhalb des kritischen Anwendungsbereichs im festen oder zumindest zähfesten Zustand vorliegt.

Die Beschaffenheit der Suspension (3), das heißt insbesondere die Packungsdichte der magnetisierbaren Partikel (11) in dem Medium, ist nun so gewählt, daß sich nach Einbringen der Suspension (3) und der festen Körper (4) in den Behälter von außen gesehen ein homogenes Aussehen ergibt, welches in der Figur 3 schematisch dargestellt ist, bei der die Körper (4) sowie die Innenwandung (5), welche dem zu prüfenden Kühlgut (1) benachbart ist, entweder gar nicht oder nur schwach erkennbar sind.

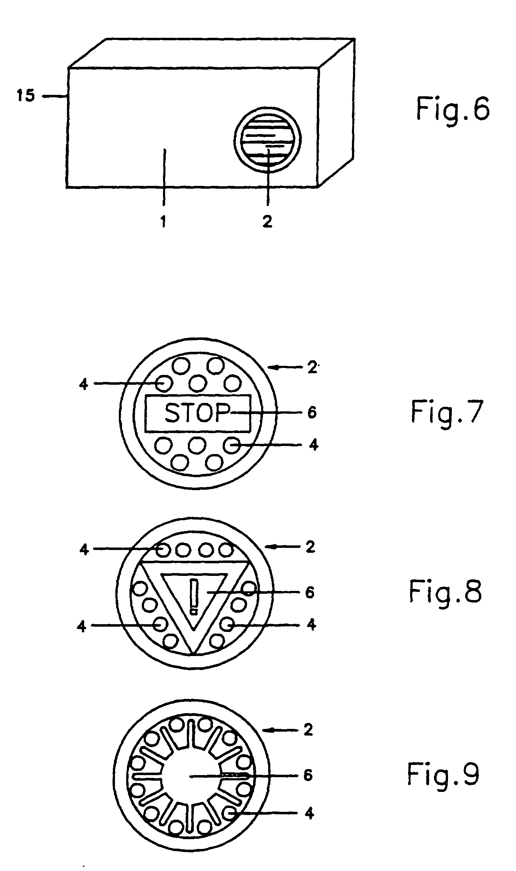

Anschließend wird, wie in Figur 6 angedeutet, der Behälter (2) mit dem zu prüfenden Medium (1), beispielsweise einem Blutplasma oder einer Nahrungsmittelverpackung, in wärmeleitende Verbindung gebracht, indem beispielsweise der Verpackungsdeckel des zu kühlenden Gutes eine Einbuchtung hat, in die der Behälter (2) fest eingesteckt oder mit diesem verklebt, verschweißt oder sonstwie verbunden wird und so jederzeit von außen sichtbar ist.

Der Behälter (2) kann auch integral ein Teil der Außenwand (15) des zu kontrollierenden Produkts (1) sein, beispielsweise kann die Verpackungshülle (15) geprägt oder genoppt sein oder Taschen enthalten, welche die beschriebene Anzeigefunktion (3, 4) des Behälters enthalten. Der Behälter (2) kann flexibel gestaltet sein, um sich so gegebenenfalls der Gestalt des Kontrollguts (1) anpassen zu können, wenn beide beispielsweise mittels einer Folie zusammengeschrumpft werden. Seine Größe richtet sich nach den gegebenen Anforderungen und kann die unterschiedlichsten Dimensionen vom mm- bis in den dm-Bereich haben.

Um den Deckel (7) des Behälters (2) mit dem Boden (5) an den Rändern (16) zu verkleben, kann man auch einen Schmelzkleber verwenden, der gleichzeitig eine Gehäusefunktion hat.

Anschließend wird das Ganze unterhalb der Grenze der maximal zulässigen Lagertemperatur gekühlt, worauf als wesentlicher Schritt des gleichfalls beanspruchten erfindungsgemäßen Verfahrens mittels eines äußeren Magnetfeldes die Körper (4), gegebenenfalls auch die magnetisierbaren Partikel der Suspension (3) mindestens teilweise, vorzugsweise voll remanent aufmagnetisiert werden.

Die Einwirkung des äußeren Magnetfeldes kann durch einen Permanentmagneten oder eine mit Strom durchflossene Spule geschehen, welche in geeigneter Zeit an dem Behälter (2) vorbeibewegt wird, so daß die beschriebene Magnetisierung geschieht. Die Spule kann mit Gleichstrom oder mit einem kurzzeitigen Stromimpuls beaufschlagt werden. Die Feldstärke des so erzeugten magnetischen Feldes soll ausreichend groß sein, sie kann in der Größenordnung der Koerzitivfeldstärke der magnetisierbaren Partikel der Körper (4) sein und kann beispielsweise das Dreifache davon betragen.

An dem äußeren Erscheinungsbild gemäß Figur 3 ändert sich bei der Magnetfeldbehandlung nichts, da sich ja die Suspension (3) jetzt im festen Zustand befindet Der Schmelzpunkt oder Erweichungsbereich des Mediums der Suspension entspricht mit anderen Worten gerade der nicht mehr zulässigen Lagertemperatur. Wird diese nun unzulässigerweise länger als erlaubt überschritten, so verflüssigt sich die Suspension (3) und die in ihr enthaltenen magnetisierbaren oder magnetischen Partikel (11) wandern, wie in Figur 2 dargestellt, zu den festen Körpern (4) und werden dort festgehalten, so daß bei der Draufsicht auf die Verpackung (1, 2) das in Figur 4 gezeigte Bild erscheint Auf einfache Weise ist so optisch klar erkennbar, daß die zulässige Lagertemperatur überschritten wurde. Auch bei erneutem Einfrieren bleibt diese Struktur beziehungsweise das entsprechende Wamsymbol erhalten, so daß eine zuverlässige irreversible Anzeige zeitweiliger Überschreitung der zulässigen Lagertemperatur auf sehr einfache Weise erreicht worden ist.

Selbstverständlich gibt es erfindungsgemäß eine Anzahl von Abwandlungen der vorgehend beschriebenen Ausführungsform. Dabei kann die Anzeige der zeitweiligen Überschreitung der zulässigen Temperatur auf verschiedene Weise angezeigt werden. In der Folge werden einige besonders bevorzugte Vorrichtungen beschrieben.

Gemäß der Ausführung nach Figur 5 sind die Suspension (3) sowie die festen Körper (4) voneinander räumlich getrennt. Dazu ist die eine Wand (7) des Behälters (2) eben ausgestaltet, während die entgegengesetzte Wand (5) geprägt ist, also beispielsweise mit Noppen (8) ausgestattet ist. Nun wird zum Beispiel in die erhabenen Noppen die magnetisierbare Füllung (4) eingefüllt, während die vertieften Noppenteile die Suspension (3) enthalten oder umgekehrt. Zur Verbesserung des Sichtbarwerdens des Wamsymbots ist ferner die Innenwand (5), welche dem Kühlgut (1) unmittelbar benachbart ist, mit einer reflektierenden oder farbigen Beschichtung (6) versehen. Ebenso kann diese Beschichtung eine Beschriftung (Figur 7) oder ein geometrisches Muster (Figur 8 und 9) enthalten. Die Funktionsweise ist selbstverständlich jeweils die gleiche wie anhand der Figuren 1 und 2 beziehungsweise 3 und 4 beschrieben. Die Wände (5) und (7) sind miteinander verklebt oder verschweißt. Die Außenwand (7) ist mindestens teilweise transparent, während die Innenwand (5) mit dem geprägten Teil (8) transparent oder opak sein kann. Auf die Materialauswahl der Wände wird noch weiter unten eingegangen. Die geometrische Anordnung der Körper (4) wird der Symbolik oder der Schrift angepaßt.

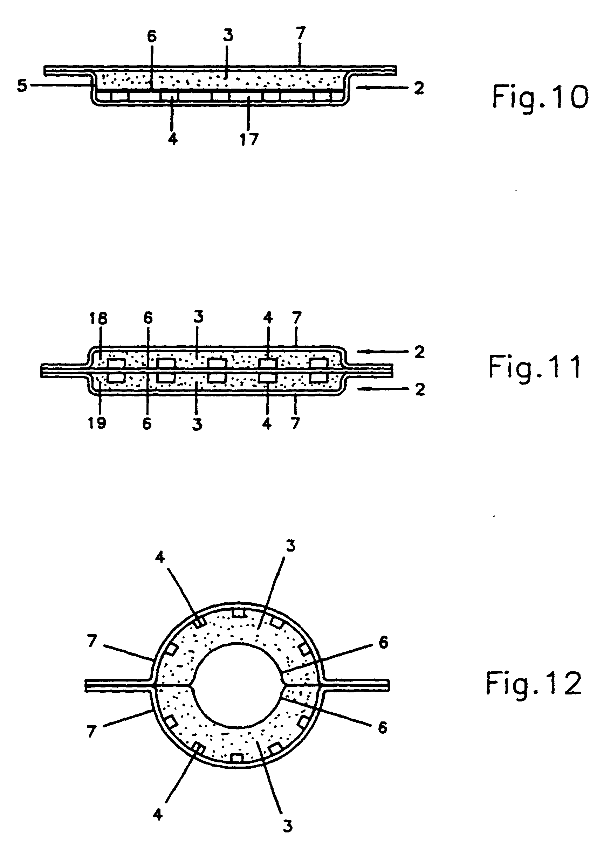

Von der Ausführung gemäß Figur 5 sind auch einige Varianten geeignet, von denen zwei beispielhaft in den Figuren 10 und 11 dargestellt sind. Gemäß Figur 10 sind die Körper (4) unterhalb der Signalfläche (6) angeordnet. Dabei kann die Signalfläche (6) perforiert, d. h. mit Löchern versehen sein, so daß die Partikel (11) bei Aufschmelzen des Mediums der Suspension (3) in die Unterseite (17) wandern und sich dort in üblicher Weise an der Struktur (4) anlagern.

Gemäß Figur 11 ist der Behälter aus zwei spiegelbildlichen identischen oder vergleichbaren Hälften (18, 19) mit der Signalfläche (6) als Trennfläche aufgebaut, in diesem Fall ist die gesamte Außenwandung (7) transparent. Das Zusammenfügen dieses Behälters (2) mit der Verpackung (1) ist einfach und irrtumsfrei zu bewerkstelligen, da Ober- und Unterseite (18, 19) vergleichbar sind. Die Signalfläche (6) kann analog Figur 5 auch geprägt oder genoppt sein.

Während die bisher beschriebenen Ausgestaltungen des Behälters (2) als Kapsel oder Plakette entweder eine rechteckige (quaderförmige) oder kreisförmige Gestalt haben, kann der Behälter auch beliebige andere Formen haben, beispielsweise den in Figur 12 gezeigten kugelförmigen oder aus zwei Zylinderhälften bestehenden Aufbau. Dabei ist die Außenwand (7) kreisförmig gebogen, desgleichen auch die reflektierende oder farbige Schicht (6), welche hier die Innenwandung (5) des Behälters ersetzt, in dem sich in üblicher Weise die Suspension (3) befindet. Die fixierten magnetischen Strukturen (4) können sich entweder, wie in der Figur 12 dargestellt, in der Außenwandung (7) oder auch (wie nicht dargestellt) an der reflektierenden oder farbigen Innenwandung (6) befinden.

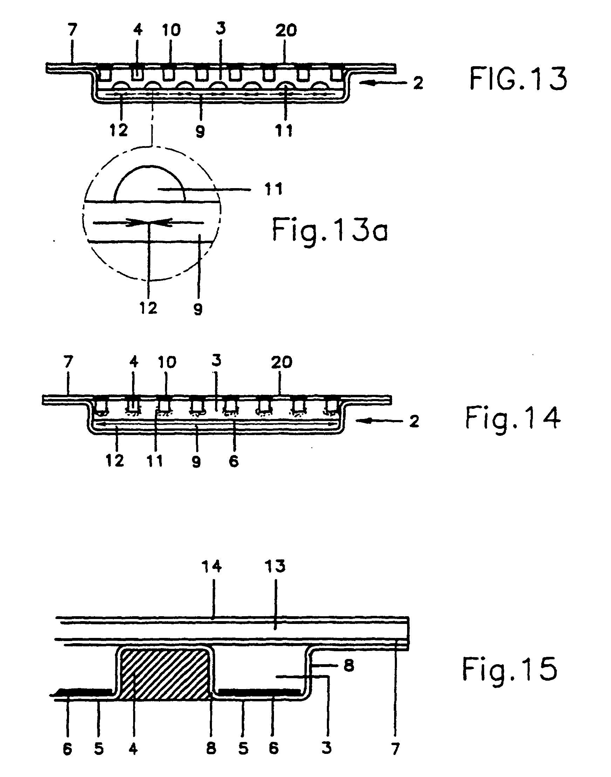

Eine weitere ebenfalls bevorzugte Ausführung geht aus der Figur 13 hervor. Bei dieser sind die Körper (4) an der Innenseite der transparenten Außenwand (7) angeklebt, die Suspension (3) befindet sich in üblicher Weise im Innenraum des Behälters. In Verbindung mit der Innenseite der Innenwand (5) befindet sich statt der Farbschicht beziehungsweise der reflektierenden Schicht (6) eine Magnetfolie (9), der mit geeigneten aus dem Stand der Technik bekannten Mitteln ein magnetisches Muster (12) aufgeprägt ist. Zusätzlich kann sich an den Stellen der Außenwand (7), an denen die Körper (4) an der Innenseite der Außenwand (7) angeklebt sind, ein lichtundurchlässiges Muster (10) befinden, dessen Dimension bevorzugt etwas größer ist als die Ausdehnung der Körper (4). Diese Magnetfolie oder Magnetplatte (9) kann auch nur teilweise den Boden (5) des Behälters bedecken, sie braucht nicht unbedingt flach zu sein, sie kann auch Prägungen, Noppen oder ähnliches enthalten.

Die Wirkungsweise dieser Vorrichtung ist, wie aus dem Vergleich der Figuren 13 und 14 hervorgeht, wie folgt. Nach Einbringen der Suspension (3) sowie der Körper (4) in den Innenraum des Behälters sammeln sich die Partikel (11) bevorzugt an den Stellen (12) der Magnetfolie (9) mit Ortswechsel der Magnetisierung an (vgl. Figur 13a) und sind nach außen sichtbar, da sie ja den transparenten Teilen (20) der Außenwand (7) gegenüberliegen. Nach Unterschreiten der maximal zulässigen Lagertemperatur wird der Behälter gemäß Figur 13 mit einem äußeren magnetischen Feld beaufschlagt, worauf die magnetisierbaren Partikel (11) der Suspension (3) sowie der Körper (4) remanent magnetisiert und wobei gleichzeitig das eingeprägte magnetische Muster (12) der Magnetfolie (9) zerstört wird. Wird nun bei diesem Behälter die zulässige Temperatur überschritten, so wandern, da die Suspension (3) nunmehr wieder verflüssigt wird, die magnetischen Teilchen an die Körper (4), so daß sich das in Figur 14 gezeigte Erscheinungsbild ergibt. Dabei kann zur Verdeutlichung der Anzeige die der Außenwand (7) zugewandte Seite der Magnetfolie (9) entweder farbig oder mit einem Muster oder mit einer Beschriftung versehen sein.

In einer (nicht gezeichneten) Variante dieser Anordnung können sich auch die Partikel (11) zunächst an einer für den Betrachter verdeckten Stelle der Magnetfolie ansammeln und dann nach Auftauen der Suspension an sichtbare Stellen wandern und so ein sichtbares anderes Muster bilden. In dem Fall gemäß Figur 13 dient das Medium der Suspension lediglich als Fixierungsmittel für die Partikel im gefrorenen Zustand.

Bezüglich der Materialzusammensetzung des Behälters und seines Inhalts sind in besonderer Weise Gesichtspunkte bezüglich Lebensmittel- und Entsorgungsfreundlichkeit maßgebend. Die dem Betrachter zugewandte Seite (7) des Behälters soll mindestens stellenweise eine hohe Transparenz aufweisen, kann aber eingefärbt sein, die Außenseite der Wand (7) soll vorteilhafterweise eine beschlagsmindemde Ausrüstung haben, damit der Betrachter nach Entnahme der Ware ohne Abwischen den Zustand (ob einwandfrei oder zeitweise aufgetaut) erkennen kann. Der Behälter kann beispielsweise aus Polyethylentherephthalat, aus Polyolefin, wie Polypropylen oder Polyethylen, oder aus Celluloseacetat oder Gelatinefolie bestehen. Die Innenseite der Wandung kann eine antistatische Ausrüstung haben und soll gegenüber der Suspensionsflüssigkeit benetzungsfreundlich sein. Selbstverständlich ist eine ausreichende Bruchfestigkeit im Temperaturanwendungsbereich erforderlich, ebenso eine Beständigkeit gegenüber den verwendeten Suspensionsflüssigkeiten (3). Der andere, dem Betrachter abgewandte Teil (5) des Behälters (2) kann entweder aus dem gleichen Material wie der obere Teil bestehen, er kann aber auch beispielsweise aus aluminiumkaschiertem Papier zusammengesetzt sein. Er kann auch eingefärbt sein, statt eine extra Farbschicht zu haben, in jedem Fall ist eine Signalfarbe mit hoher Leuchtkraft vorteilhaft.

Die Zusammensetzung des Trägermediums für die magnetisierbaren Partikel (11) kann sein wie in den bereits genannten Druckschriften US 3 675 501 oder DE-A 42 10 739 beschrieben. Sie richtet sich nach der Temperatur des Phasenübergangs. Fette, Wachse, Öle oder Eutektika sind je nach Phasenübergang flüssig/fest oder erweichend geeignet. Wichtig ist eine ausreichende Transparenz. Zusätzlich können diesem Medium aus dem Stand der Technik bekannte Tenside zur Gewährleistung der Benetzungsfreundlichkeit an den Wänden sowie niedrige Alkohole und Dispergatoren für die Partikel zugefügt sein.

Für die magnetisierbaren Partikel (11) der Suspension (3) sind alle infrage kommenden Stoffe wie Eisenoxide, dotiert oder undotiert, Metallpulver oder Metall-Legierungspulver, Chromdioxid, oder ähnliche anwendbar. Die Partikel können in üblichem organischem Bindemittel eingebettet sein oder einzeln oder gesintert oder granuliert vorliegen. Ebenso können die Partikel in Form von Micellen oder Mikrokapseln vorliegen. Auch ein zweiphasiges Gemisch, bestehend aus einer wässrigen sowie einer Ölphase ist für die Suspension geeignet. Der Gewichtsanteil der Partikel in der Suspension kann in weiten Grenzen variiert werden und beispielsweise als Steuergröße für den Zeitpuffer des Auftauens beziehungsweise der Anzeige benutzt werden.

Das Bindemittel für die Partikel (11) kann eingefärbt sein, beispielsweise in einer Gegenfarbe zur farbigen Schicht (6), um den Kontrast zu erhöhen oder um eine geringe Partikelkonzentration zu ermöglichen.

Als weiterer Zeitpuffer kann die Viskosität der Suspension (3) als Regulativ eingestellt werden.

Für die Anordnung der magnetisierbaren Partikel hat sich als besonders günstig erwiesen, wenn diese in kleinen oder größeren Agglomeraten, vorzugsweise in sphärischer oder plättchenförmiger Konfiguration vorliegen. Die Größe dieser Partikel kann in weiten Grenzen variiert werden, von weniger als 1 µm bis in den mm-Bereich. Wichtig ist eine hohe Deckkraft im anfänglichen Zustand der Suspension, damit eine homogene Struktur, beispielsweise gemäß Figur 3, erreicht wird.

Alternativ dazu können die Partikel (11) plättchenförmig gestaltet sein und dann beispielsweise aus einer gefärbten unmagnetischen Außenfläche und einer magnetischen Innenfläche bestehen.

Das magnetisierbare Material der Körper (4) kann der gleiche Stoff wie die Partikel (11) sein. Es kann in lösemittelfreier Schmelzknetung in Thermoplasten feindispergiert werden und gegebenenfalls mit Dispergatoren versehen sein. Es erhält beim Erstarren seine gewünschte Form. Die Körper können je nach Anwendungszweck und Ausführungsform einzeln oder in Gruppen funktionsgerecht geformt und positioniert an der Innen- und/oder der Außenseite des Ober- und Unterteils des Behälters angebracht sein. Ihre Anordnung, Größe und Magnetisierung im aufmagnetisierten Zustand dient zur Steuerung des Zeitpuffers Auftauen-Anzeige. Bei den Ausführungsformen nach Figur 1 und 2 müssen die Körper (4) selbstverständlich chemisch stabil gegen die Suspension (3) sein.

Die Körper (4) können auch beispielsweise in Ringform oder in anderer Gestalt geformt werden. Damit sich die Partikel (11) im Fall des Auftauens der Suspension an bevorzugte Stellen der Körper (4) konzentriert ablagem, kann es zweckmäßig sein, die Körper (4) bei der oben beschriebenen Magnetfeldbehandlung senkrecht, d. h. in der Richtung des Beschauers, zu magnetisieren. Jedoch kann auch eine Waagrecht- oder Schrägmagnetisierung durchgeführt werden.

In einer besonderen Ausführung kann es zweckmäßig sein, daß im Innenraum des Behälters die magnetisierbaren Partikel beziehungsweise das Partikel-Bindemittelgemisch als bereits vormagnetisierte Zonen im Behälter deponiert werden. In diesen Fällen dient die später einzubringende Flüssigkeit nur als Fixierung im gefrorenen Zustand sowie als Transportmedium nach dem Auftauen.

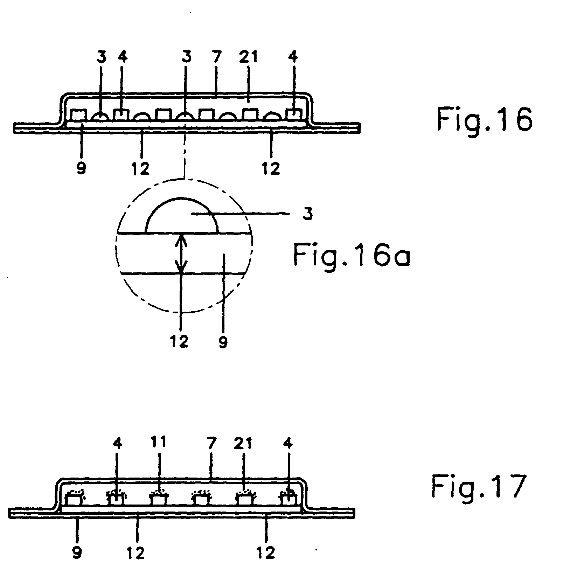

Eine weitere Variante ist in der Figur 16 dargestellt, welche eine Abwandlung von Figur 13 ist. Dabei ist nicht wie bisher der gesamte Innenraum (21) des Behälters mit der Suspension ausgefüllt, sondern nur teilweise, wobei sich die Suspension (3) an den Stellen (12) wechselnder Magnetisierung der Magnetplatte (9) ansammelt (Figur 16a). Sie wird dann beim Einfrieren an diesen Stellen fixiert. Nach der geschilderten Magnetfeldbehandlung sowie im Fall des Auftauens wandern die Partikel wie üblich zu den Körpern (4). Dieser Fall ist in Figur 17 dargestellt.

In einer weiteren Variante zur Figur 16 kann der übrige Innenraum (21) auch ein Medium enthalten, das beim Einfrieren fest wird. In diesem Fall kann das Medium der Suspension (3) im gesamten Temperaturbereich flüssig bleiben.

Mittels der erfindungsgemäßen Vorrichtung ist es auch in einer weiteren Variante möglich, bei einer unbeabsichtigten kurzzeitigen Berührung des Temperatur-Indikators jedoch ohne effektives Auftauen des Kühlgutes, eine falsche Anzeige zu vermeiden, indem, wie in Figur 15 dargestellt, oberhalb der Wandung (7) noch eine Außenwandung (14) vorgesehen ist und wobei in den Zwischenraum (13) beispielsweise Wasser oder Alkohol oder ein Festkörper eingefüllt ist und so als Puffer dem Temperatur-Indikator vorgeschaltet ist. In analoger Form kann auch die Außenwandung (7) mehrschichtig gestaltet sein, um den Wärmeübergang nach außen gering zu halten. Ebenso kann der Wärmeübergang durch Größe und/oder Dicke des Behälters (2) gesteuert werden, weiterhin kann der Zwischenraum auch zwischen Behälter und Kühlgut (1) eingebaut sein.

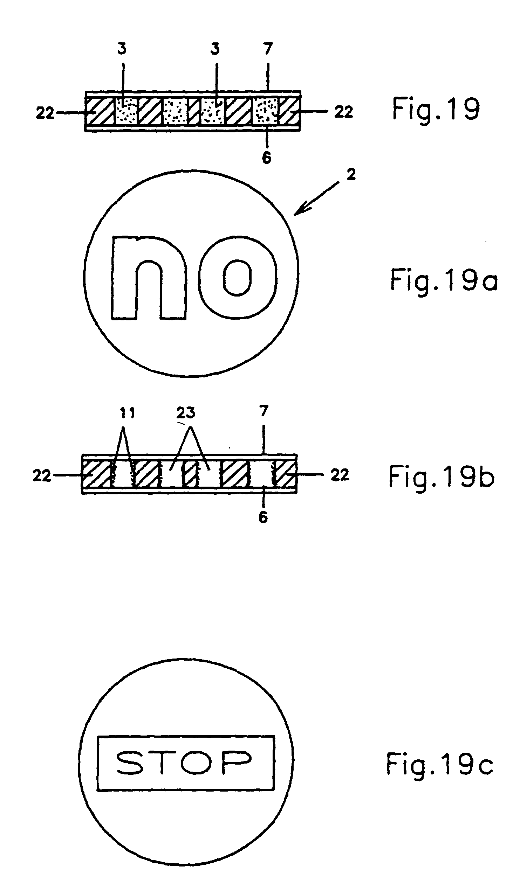

Einen etwas andersartigen Weg gemäß der vorliegenden Erfindung stellt die Figur 19 dar. Dabei enthält der Behälter nicht mehrere magnetisierbare Körper (4), sondem statt dessen eine mit Löchem (23) versehene dünne magnetisierbare Platte (22) aus gleichem Material, deren Größe vorzugsweise mit der Ausdehnung des Behälters (2) übereinstimmt. In den Löchern (23) ist die Suspension (3) eingefüllt, die Platte ist auf der Betrachterseite mit einer transparenten Folie (7) abgeklebt und auf der Gegenseite, die dem zu kontrollierenden Produkt zugewandt ist, mit einer farbigen oder reflektierenden oder mit Symbolen versehenen Schicht (6) abgeklebt Im Ursprungszustand sowie nach Tiefkühlen und der bereits mehrfach genannten Magnetfeldbehandlung erkennt der Betrachter aufgrund der Eigenfärbung der Platte und Suspension beispielsweise die in Figur 3 dargestellte homogene Struktur.

Nach dem Auftauen sammeln sich (vgl. Figur 19b) die magnetisierbaren oder magnetisierten Partikel (11) der Suspension (3) an den Löcherkanten der Platte (22) an, so daß als Folge sich dem Betrachter eine andere Symbolik, beispielsweise wie in Figur 19a oder 19c dargestellt, ergibt, da ja die vorher opaken Löcher (23) jetzt transparent geworden sind und so die Signalschicht (6) freigeben. In Figur 19a ist als Beispiel die Bezeichnung "no" als Löcherkonfiguration ausgestanzt. In Figur 19c ist der rechteckige Rand und das Symbol "Stop" ausgestanzt, natürlich sind viele andere Wamsymbole oder Darstellungsweisen ebenso geeignet. Die Platte (22) kann eine Dicke von etwa 0,1 mm bis mehrere mm haben.

Weiterhin ist es möglich, die erfindungsgemäße Vorrichtung in mehrfachen Einheiten vorzusehen, und zwar aus folgenden unterschiedlichen Gründen:
- Einmal können mehrere Einheiten verwendet werden, wobei die Suspensionen beispielsweise einen unterschiedlichen Temperaturumschlagspunkt fest/flüssig haben, so daß man nachträglich feststellen kann, welche Temperatur überschritten beziehungsweise erreicht worden ist. Alternativ dazu können die Körper (4) unterschiedliche Größe oder Magnetisierung oder Koerzitivkraft besitzen, um ein Maß für die Zeit der Temperaturüberschreitung anzuzeigen.
- Weiterhin kann es aus Sicherheitsgründen vonnöten sein, mehrere identische Einheiten mit dem Kontrollgut oder der Umgebung in wärmeleitende Verbindung zu bringen, um gegebenenfalls bei Ausfall eines einzelnen Elements, bedingt beispielsweise durch Auslaufen der Suspension, trotzdem noch einen funktionierenden Indikator zu haben.
- Außerdem kann eine Einheit so wie eine der oben beschriebenen zusätzlich mit einer weiteren Einheit kombiniert werden, wobei deren Medium im gesamten Temperaturbereich, also auch unterhalb der maximal zulässigen Temperatur, flüssig ist. Dies dient dem Verbraucher als Erkennungsindiz ("Kalibration") dafür, ob wirklich beim Temperaturindikator die Magnetfeldbehandlung durchgeführt worden ist.

Die erfindungsgemäße Vorrichtung ist deswegen in hohem Maße fälschungssicher, weil das Muster, beispielsweise wie in den Figuren 7 - 9, bereits in einem abgeschlossenen Raum optisch vorgegeben ist und nicht wieder zum Verschwinden gebracht werden kann.

Im Fall der Vorrichtung nach Figur 13 ist die Fälschungssicherheit dadurch gegeben, daß das feine Muster (12) nicht mehr von außen nachträglich neu beschreibbar ist.

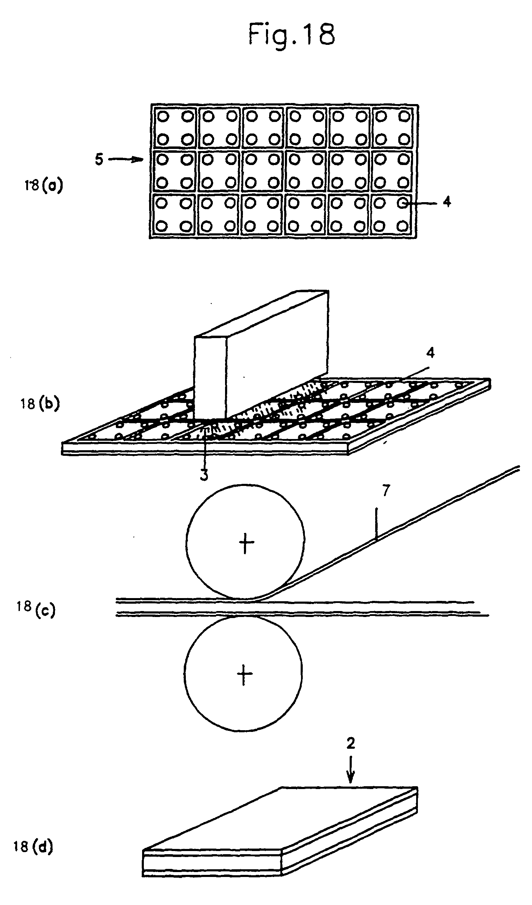

Schließlich wird anhand der Figuren 18 a - d beispielhaft ein bevorzugtes kontinuierlich ablaufendes Verfahren zur Herstellung des erfindungsgemäßen Temperaturindikators geschildert.
*(a)* Eine laufende Folienbahn wird auf einer Seite als Grundfolie (5) mit dem gewünschten Muster bedruckt oder mit Farbe überzogen und geprägt sowie anschließend mit einem Schmelzkleber in einer Gitterstruktur an den geprägten Stellen beschichtet, wobei die gewünschte Geometrie des Indikators entsprechend eingestellt wird.
*(b)* In die Gitterstruktur auf der Folienbahn werden nacheinander oder gleichzeitig die Suspension (3) eingefüllt und die Körper (4) in der gewünschten Form und Geometrie dosiert eingespritzt. In einer Variante kann auch die Suspension mit Überlauf aufgebracht oder - bei hoher Viskosität - abgerakelt werden. Weiterhin können - wie dargestellt - die Körper (4) bereits in der Stufe a eingebracht werden.
*(c)* Die Einheit wird zusammengefügt, indem die Grundfolie mit Suspension und festen Körper mit der planen Deckfolie (7) zwischen beheizten Walzen zusammengebracht und dabei verklebt wird.
*(d)* Die fertigen Einheiten (2) werden aus dem Verbund ausgestanzt. In einer Variante können auch die Einheiten ohne Deckfolie ausgestanzt werden und danach mit Suspension und/oder den Massen (4) befüllt werden, worauf anschließend im Warmpreßverfahren die vorher gestanzte Deckfolie aufgepreßt wird.

## Patentansprüche

1. Vorrichtung zur irreversiblen Anzeige zeitweiliger Überschreitung der zulässigen Temperatur von Waren, Räumen oder ähnlichem, bestehend aus einem Behälter (2), der in wärmeleitender Verbindung mit dem zu überwachenden Objekt (1) steht und der in seinem Innenraum (21) eine Suspension (3) enthält, bestehend aus einem Medium mit einem Schmelzpunkt oder Erweichungsbereich, der im Bereich der Kontrolltemperatur liegt, in welches magnetisierbare Partikel (11) eingebracht sind und wobei der Behälter zusätzlich mindestens an einer Stelle einen magnetisierbaren Körper (4) im festen Zustand geformt enthält, wobei der Behälter (2) eine von außen erkennbare Schicht (5, 6, 9) umfasst, welche die zeitweilige Überschreitung einer zulässigen Temperatur optisch anzeigt und die dem Betrachter zugewandte Außenwandung (7) ganz oder teilweise transparent ist, und wobei erst nach erfolgtem Phasenübergang flüssig/fest der Suspension (3) durch zeitweilige Einwirkung eines äußeren Magnetfeldes die Körper (4) sowie gegebenenfalls die Partikel (11) der Suspension (3) mindestens teilweise remanent auf magnetisiert werden.

2. Vorrichtung nach Anspruch 1, **dadurch gekennzeichnet, dass** die optisch anzeigende Schicht (6) an einer, dem zu überwachenden Objekt (1) zugewandten Innenseite (5) des Behälters (2) vorgesehen ist.

3. Vorrichtung einem der Ansprüche 1 oder 2, **dadurch gekennzeichnet, daß** die optisch anzeigende Schicht eine farbige und/oder reflektierende und/oder mit Symbolen versehene Signalfläche (6) ist.

4. Vorrichtung nach einem der Ansprüche 1 oder 2, **dadurch gekennzeichnet, daß** der Behälter (2) an seiner dem zu überwachenden Objekt (1) zugewandten Seite (5) eine Magnetfolie (9) mit einem magnetisch aufgeprägten Muster (12) als optisch anzeigende Schicht aufweist.

5. Vorrichtung nach Anspruch 4, **dadurch gekennzeichnet, daß** die Außenseite (7) des Behälters (2) auf einem Teil ihrer Fläche ein lichtundurchlässiges Muster (10) besitzt.

6. Vorrichtung nach Anspruch 5, **dadurch gekennzeichnet, daß** das lichtundurchlässige Muster (10) nach außen die Körper (4) abdeckt.

7. Vorrichtung nach Anspruch 4, **dadurch gekennzeichnet, daß** die Suspension (3) nur einen Teil des Innenraumes (21) des Behälters (2) ausfüllt.

8. Vorrichtung nach Anspruch 7, **dadurch gekennzeichnet, daß** der verbleibende Teil des Innenraums (21) ein weiteres Medium mit einem Schmelzpunkt oder Erweichungsbereich im Bereich der Kontrolltemperatur enthält.

9. Vorrichtung nach Anspruch 8, **dadurch gekennzeichnet, daß** das Medium der Suspension (3) im gesamten Kontrolltemperaturbereich flüssig ist.

10. Vorrichtung nach Anspruch 1, **dadurch gekennzeichnet, daß** entweder die Außenwand (7) oder die Innenwand (5) des Behälters durch Noppung eine geprägte Struktur (8) aufweist, wobei die erhabenen und die vertieften Noppen vorzugsweise alternierend die Suspenslon (3) beziehungsweise die Körper (4) enthalten.

11. Vorrichtung nach Anspruch 3, **dadurch gekennzeichnet, daß** entweder die Außenwand (7) oder die Innenwand (5) des Behälters durch Noppung eine geprägte Struktur (8) aufweist, wobei die erhabenen und die vertieften Noppen vorzugsweise altemierend die Suspension (3) beziehungsweise die Körper (4) enthalten.

12. Vorrichtung nach Anspruch 3, **dadurch gekennzeichnet, daß** die Körper (4) unterhalb der Schicht (6) entgegengesetzt der dem Betrachter zugewandten Außenseite (7) angebracht sind.

13. Vorrichtung nach Anspruch 3 oder 11, **dadurch gekennzeichnet, daß** der Behälter aus zwei spiegelbildlichen oder vergleichbaren Hälften (18, 19) mit der Signalfläche (6) als Trennfläche besteht.

14. Vorrichtung nach Anspruch 1, **dadurch gekennzeichnet, daß** der magnetisierbare Körper eine mit mehreren Löchern (23) versehene dünne Platte (22) ist, wobei in den Löchern Suspension (3) eingefüllt ist, die Platte auf der Betrachterseite mit einer transparenten Folie (7) abgeklebt und auf der der Betrachterseite entgegengesetzten Seite mit einer farbigen, reflektierenden oder eine Symbolik enthaltenden Schicht (6) abgeklebt ist.

15. Vorrichtung nach Anspruch 1, **dadurch gekennzeichnet, daß** mindestens eine der Wandungen (5, 7) wärmepuffernd aufgebaut ist.

16. Vorrichtung nach Anspruch 1, **dadurch gekennzeichnet, daß** die Suspension (3) sowie die Körper (4) an sich bekannte magnetisierbare Partikel enthalten.

17. Vorrichtung nach Anspruch 16, **dadurch gekennzeichnet, daß** die magnetisierbaren Partikel der Suspension (3) in organischen Bindemitteln dispergiert sind.

18. Vorrichtung nach Anspruch 16, **dadurch gekennzeichnet, daß** die magnetisierbaren Partikel der Suspension (3) sphärische oder plättchenförmige Agglomerate bilden.

19. Vorrichtung nach Anspruch 16, **dadurch gekennzeichnet, daß** das Medium der Suspension (3) aus Fetten, Wachsen, Ölen, Wasser und/oder Eutektika besteht.

20. Vorrichtung nach Anspruch 16, **dadurch gekennzeichnet, daß** die Suspension (3) ein zweiphasiges System bestehend aus einer wässrigen sowie einer Ölphase ist.

21. Verfahren zur Temperaturkontrolle mit einer Vorrichtung gemäß den Ansprüchen 1 bis 20, **dadurch gekennzeichnet, daß** mindestens ein weiterer Behälter vorgesehen ist, dessen Medium im gesamten Temperaturkontrollbereich flüssig ist und das als Kalibrierung für erfolgte Magnetfeldbehandlung dient.

22. Verfahren zur Herstellung eines Behälters nach den Ansprüchen 1 bis 20, **dadurch gekennzeichnet, daß** in einem ersten Schritt eine Folienbahn mit einer optisch anzeigenden Schicht versehen, geprägt und an den geprägten Stellen mit Heißschmelzkleber beaufschlagt wird, in einem zweiten Schritt in die entstehenden Vertiefungen die Suspension (3) mit den magnetisierbaren Partikeln und die festen Massen (4) eingebracht werden, in einem dritten Schritt die Deckfolie aufgebracht und an den geprägten Stellen mit der Grundfolie heißverklebt wird und dass in einem vierten Schritt an den Prägestellen die Einzelelemente (2) ausgeschnitten werden.

## Claims

1. A device for the irreversible indication of temporary exceeding of the permissible temperature of products, rooms or the like, consisting of a container (2) which has a heat-conducting connection to the object (1) to be monitored and which contains in its interior (21) a suspension (3) consisting of a medium which has a melting point or softening range in the range of the monitoring temperature and into which magnetizable particles (11) are introduced, the container additionally containing, at least at one point, a magnetizable element (4) shaped in the solid state, the container (2) having an optically indicating layer (5,6,9), detectable from the outside, which indicates the temporary exceeding of a permissible temperature, the outer wall (7) facing the observer being completely or partially transparent and wherein the elements (4) and, as the case may be, the particles (11) of the suspension (3) will at least partly be provided with a residual induction due to the temporary action of an external magnetic field only after the suspension (3) has undergone a liquid/solid phase transition.

2. The device as claimed in claim 1. **characterized in that** the optically indicating layer (6) is provided on a inner surface (5) of the container (2) which faces the object (1) to be monitored.

3. The device as claimed in one of claims 1 or 2, **characterized in that** the optically indicating layer signal layer (6) which is colored and/or reflecting and/or provided with symbols.

4. The device as claimed in one of claims 1 or 2, **characterized in that** the container (2) has as a optically indicating layer, on its side (5) facing the product (1) to be monitored, a magnetic film (9) having a magnetically applied pattern (12).

5. The device as claimed in claim 4, **characterized in that** the outer surface (7) of the container (2) has an opaque pattern (10) on a part of its surface.

6. The device as claimed in claim 5, **characterized in that** the opaque pattern (10) covers the elements (4) on the outside.

7. The device as claimed in claim 4, **characterized in that** the suspension (3) fills only a part of the interior (21) of the container (2).

8. The device as claimed in claim 7, **characterized in that** the remaining part of the interior (21) contains a further medium having a melting point or softening range in the range of the monitoring temperature.

9. The device as claimed in claim 8, **characterized in that** the medium of the suspension (3) is liquid in the total monitoring temperature range.

10. The device as claimed in claim 1, **characterized in that** either the outer wall (7) or the inner wall (5) of the container has an applied structure (8) in the form of nubs, the projecting and the recessed nubs preferably alternately containing the suspension (3) and the elements (4).

11. The device as claimed in claim 3, **characterized in that** either the outer wall (7) or the inner wall (5) of the container has an applied structure (8) in the form of nubs, the projecting and the recessed nubs preferably alternately containing the suspension (3) and the elements (4).

12. The device as claimed in claim 3, **characterized in that** the elements (4) below the layer (6) are applied opposite the outer surface (7) facing the observer.

13. The device as claimed in claim 3 or 11. **characterized in that** the container consists of two mirror-image or comparable halves (18, 19) having the signal surface (6) as a parting surface.

14. The device as claimed in claim 1, **characterized in that** the magnetizable element is a thin sheet (22) provided with a plurality of holes (23), suspension (3) being filled into the holes, a transparent film (7) being adhesively bonded to the observer's side of this sheet and a colored, reflecting or symbolcontaining layer (6) being adhesively bonded to the side opposite the observer's side.

15. The device as claimed in claim 1, **characterized in that** at least one of the walls (5,7) is designed as a heat buffer.

16. The device as claimed in claim 1. **characterized in that** the suspension (3) and the elements (4) contain magnetizable particles known per se.

17. The device as claimed in claim 16, **characterized in that** the magnetizable particles of the suspension (3) are dispersed in organic binders.

18. The device as claimed in claim 16, **characterized in that** the magnetizable particles of the suspension (3) form spherical or lamellar agglomerates.

19. The device as claimed in claim 16, **characterized in that** the medium of the suspension (3) consists of fats, waxes, oils, water and/or eutectic mixtures.

20. The device as claimed in claim 16. **characterized in that** the suspension (3) is a two-phase system consisting of an aqueous and an oil phase.

21. A process for temperature monitoring using a device as claimed in one of claims 1 to 20. **characterized in that** at least one further container is provided whose medium is liquid in the entire temperature monitoring range and which serves as calibration for the completed magnetic field treatment.

22. A process for the production of a container as claimed in one of claims 1 to 20, **characterized in that** a film web is provided with an optically indicating layer, structured and treated with hotmelt adhesive in the structured areas in a first step, that the suspension (3) and the solid materials (4) are introduced into the resulting recesses in a second step, that the top film is applied and is heat-sealed with the base film in the structured areas in a third step and that the individual elements (2) are cut out in the structured areas in a fourth step.

## Revendications

1. Dispositif pour indiquer de manière irréversible un dépassement temporaire de la température admissible de produits, de locaux ou similaires, comprenant un récipient (2) qui est en communication thermoconductrice avec l'objet (1) à surveiller et qui dans son espace intérieur (21) contient une suspension (3) constituée d'un milieu qui présente un point de fusion ou une plage de ramollissement se situant dans la plage de la température de contrôle et dans lequel des particules magnétisables (11) sont introduites, le récipient contenant également, au moins à un endroit, un corps magnétisable (4) formé à l'état solide, le récipient (2) comprenant une couche (5, 6, 9) visible de l'extérieur, qui indique optiquement le dépassement temporaire d'une température admissible, la paroi extérieure (7) tournée vers l'observateur étant entièrement ou partiellement transparente, dans lequel les corps (4) ainsi que le cas échéant les particules (11) de la suspension (3) ne sont au moins partiellement magnétisés de manière rémanente qu'après une transition de phase liquide en phase solide de la suspension (3) par action temporaire d'un champ magnétique extérieur.

2. Dispositif selon la revendication 1, **caractérisé en ce que** la couche indicatrice optique (6) est prévue sur une face intérieure (5) du récipient (2) tournée vers l'objet (1) à surveiller.

3. Dispositif selon l'une quelconque des revendications 1 ou 2, **caractérisé en ce que** la couche indicatrice optique est une surface de signalisation (6) colorée et/ou réfléchissante et/ou munie de symboles.

4. Dispositif selon l'une quelconque des revendications 1 ou 2, **caractérisé en ce que** le récipient (2) présente, sur sa face (5) tournée vers l'objet (1) à surveiller, une feuille magnétique (9) avec un motif (12) estampé de manière magnétique servant de couche indicatrice optique.

5. Dispositif selon la revendication 4, **caractérisé en ce que** la face extérieure (7) du récipient (2) présente un motif opaque (10) sur une partie de sa surface.

6. Dispositif selon la revendication 5, **caractérisé en ce que** le motif opaque (10) recouvre les corps (4) vers l'extérieur.

7. Dispositif selon la revendication 4, **caractérisé en ce que** la suspension (3) ne remplit qu'une partie de l'espace intérieur (21) du récipient (2).

8. Dispositif selon la revendication 7, **caractérisé en ce que** la partie restante de l'espace intérieur (21) contient un autre milieu présentant un point de fusion ou une plage de ramollissement se situant dans la plage de la température de contrôle.

9. Dispositif selon la revendication 8, **caractérisé en ce que** le milieu de la suspension (3) est liquide sur toute la plage de températures de contrôle.

10. Dispositif selon la revendication 1, **caractérisé en ce que** soit la paroi extérieure (7) soit la paroi intérieure (5) du récipient présente une structure (8) estampée par nopes, les nopes convexes et les nopes concaves contenant de préférence en alternance la suspension (3) ou les corps (4) respectivement.

11. Dispositif selon la revendication 3, **caractérisé en ce que** soit la paroi extérieure (7) soit la paroi intérieure (5) du récipient présente une structure (8) estampée par nopes, les nopes convexes et les nopes concaves contenant de préférence en alternance la suspension (3) ou les corps (4) respectivement.

12. Dispositif selon la revendication 3, **caractérisé en ce que** les corps (4) sont disposés sous la couche (6) à l'opposé de la face extérieure (7) tournée vers l'observateur.

13. Dispositif selon la revendication 3 ou 11, **caractérisé en ce que** le récipient est formé de deux moitiés (18, 19) inversées ou comparables, avec la surface de signalisation (6) comme surface de séparation.

14. Dispositif selon la revendication 1, **caractérisé en ce que** le corps magnétisable est une plaque (22) mince munie de plusieurs trous (23), de la suspension (3) étant introduite dans les trous, la plaque étant munie par collage d'une feuille transparente (7) du côté de l'observateur et d'une couche (6) colorée, réfléchissante ou présentant des symboles du côté opposé à l'observateur.

15. Dispositif selon la revendication 1, **caractérisé en ce qu'**un moins l'une des parois (5, 7) est réalisée de manière thermiquement isolante.

16. Dispositif selon la revendication 1, **caractérisé en ce que** la suspension (3) ainsi que les corps (4) contiennent des particules magnétisables connues en soi.

17. Dispositif selon la revendication 16, **caractérisé en ce que** les particules magnétisables de la suspension (3) sont dispersées dans des liants organiques.

18. Dispositif selon la revendication 16, **caractérisé en ce que** les particules magnétisables de la suspension (3) forment des agglomérés sphériques ou en forme de paillettes.

19. Dispositif selon la revendication 16, **caractérisé en ce que** le milieu de la suspension (3) comprend des graisses, des cires, des huiles, de l'eau et/ou des eutectiques.

20. Dispositif selon la revendication 16, **caractérisé en ce que** la suspension (3) est un système diphasique constitué d'une phase aqueuse et d'une phase huileuse.

21. Procédé de contrôle de température avec un dispositif selon les revendications 1 à 20, **caractérisé en ce qu'**au moins un autre récipient est prévu, dont le milieu est liquide sur toute la plage de contrôle de température et qui sert de calibrage pour un traitement de champ magnétique effectué.

22. Procédé de fabrication d'un récipient selon les revendications 1 à 20, **caractérisé en ce que** dans une première étape une bande de feuille est munie une couche indicatrice optique, estampée et reçoit aux endroits estampés une colle thermofusible, dans une deuxième étape la suspension (3) avec les particules magnétisables et les masses solides (4) est introduite dans les creux ainsi obtenus, et dans une troisième étape la feuille de couverture est appliquée et collée à chaud aux endroits estampés de la feuille de base, et **en ce que** dans une quatrième étape les éléments individuels (2) sont découpés aux endroits estampés.
